# EUROPEAN PATENT SPECIFICATION

(11) **EP 3 143 272 B1**
(45) Date of publication and mention of the grant of the patent: **20.06.2018**
(21) Application number: 15724095.3
(22) Date of filing: 05.05.2015
(51) Int. Cl.: F02M 37/00, F02M 37/08, F02M 37/18, F02D 41/30, B60K 15/03

(54) **FUEL SYSTEM FOR AN INTERNAL COMBUSTION ENGINE AND A METHOD FOR CONTROLLING A FUEL SYSTEM**
BRENNSTOFFSYSTEM FÜR BRENNKRAFTMASCHINE UND VERFAHREN ZUR STEUERUNG EINES BRENNSTOFFSYSTEMS
CIRCUIT DE CARBURANT POUR MOTEUR À COMBUSTION INTERNE ET PROCÉDÉ POUR COMMANDER UN CIRCUIT DE CARBURANT

(30) Priority: 14.05.2014 SE 1450562
(43) Date of publication of application: 22.03.2017
(73) Proprietor: Scania CV AB, 151 87 Södertälje (SE)
(72) Inventor: KYLSTRÖM, Kim, S-146 50 Tullinge (SE)
(74) Representative: Scania CV AB
(86) International application number: PCT/SE2015/050492
(87) International publication number: WO 2015/174907

(56) References cited:
- EP-A2- 1 300 582
- WO-A1-2004/037595
- JP-A- 2010 242 546
- US-A1- 2003 183 205
- US-A1- 2010 024 771

## Description

### FIELD OF TECHNOLOGY

The present invention relates to a fuel system for an internal combustion engine and a method to control a fuel system. The invention also relates to an internal combustion engine and a vehicle.

### BACKGROUND

An internal combustion engine, such as a diesel engine or an Otto engine, is equipped with a fuel system to transport fuel from one or several fuel tanks to the internal combustion engine's injection system. The fuel system comprises one or several fuel pumps, which may be driven mechanically by the internal combustion engine, or be driven by an electric engine. The fuel pumps create a fuel flow and pressure to transport the fuel to the internal combustion engine's injection system, which supplies the fuel to the internal combustion engine's combustion chamber.

The fuel system often comprises only a mechanical fuel pump which is driven and controlled by the internal combustion engine. If this fuel pump fails or provides too low a fuel flow, the fuel supply to the internal combustion engine ceases and the internal combustion engine stops. If the fuel system comprises only an electrically driven fuel pump, the same operational disruptions may arise, in which case the internal combustion engine stops. There is a risk that the vehicle may suddenly come to a standstill on or along a road, and therefore it is desirable that the fuel system comprises some type of redundancy, so that the vehicle may be moved with the help of the internal combustion engine. With a so-called limp home function the vehicle may in this manner be moved and transported to the nearest garage.

According to prior art, it is possible to arrange two fuel pumps driven by electric engines in a fuel system, in order to achieve redundancy if one of the fuel pumps fails or provides too low a fuel flow to the internal combustion engine.

Document US 2003/0183205 A1 shows a fuel system for an internal combustion engine, which system comprises a low pressure pump and two fuel pumps. The first fuel pump is driven by a first electric engine and the second fuel pump is driven by a second electric engine. During normal operation, only the first electric engine and the first fuel pump are active, while the second electric engine is shut off and the second fuel pump is bypassed. Should the first electric engine or the first fuel pump fail, the second electric engine is activated to drive the second fuel pump. The first fuel pump is bypassed, while fuel may still be supplied to the internal combustion engine. Document US 2003/0183205 A1 does not, however, show how fuel may be supplied to the internal combustion engine in the event the low pressure pump fails.

According to prior art, it is also possible to arrange a fuel pump driven by an electric engine in a fuel system, which comprises a fuel pump driven mechanically by an internal combustion engine.

Document WO 2004/037595 A1 shows a fuel system for an internal combustion engine, comprising two fuel pumps. One of the pumps is a fuel pump driven by an internal combustion engine and the other pump is a transfer pump, which transfers fuel from a first to a second fuel tank. According to one embodiment, the transfer pump may, via a three-way valve, lead fuel in series with the fuel pump operated by the internal combustion engine, with the objective of increasing the fuel flow during idling of the internal combustion engine. The fuel pump operated by the internal combustion engine is not able to generate a sufficient fuel flow during idling of the internal combustion engine. Document WO 2004/037595 A1 does not, however, mention how the fuel system functions in the event the fuel pump driven by the internal combustion engine fails.

Despite prior art solutions in this area, there is a need to develop a fuel system which reduces the risk of insufficient or non-existing fuel supply to the internal combustion engine in the event of an operational disruption.

### SUMMARY OF THE INVENTION

The objective of the present invention is to achieve a fuel system for an internal combustion engine, which system reduces the risk of insufficient or non-existing fuel supply to the internal combustion engine in the event of an operational disruption in the fuel pumps of the fuel system.

Another objective of the invention is to achieve a fuel system for an internal combustion engine, allowing for simple management of operational disruptions and enabling the driver of a vehicle to move the vehicle and drive it to a garage in the event of an operational disruption in the fuel pumps of the fuel system.

Another objective is to achieve a fuel system, with a simple and non-bulky redundancy for the fuel pumps of the fuel system at operational disruptions in any of the fuel pumps of the fuel system.

Another objective is to achieve a fuel system with a redundancy, which is robust and at least partly passive, i.e. meaning that no power supply and/or control signals from a control device is required for its function.

These objectives are achieved with a fuel system for an internal combustion engine, which fuel system comprises a first fuel tank and a second fuel tank, a first fuel conduit arranged in connection with the first fuel tank and the second fuel tank, and a second fuel conduit arranged in connection with the first fuel tank and the internal combustion engine. The fuel system also comprises a main supply pump and a transfer pump, whereat the main supply pump is arranged to supply fuel from the first fuel tank, via the second fuel conduit, and whereat the transfer pump is arranged to supply fuel from the second fuel tank to the first fuel tank, via the first fuel conduit. A first electric engine is arranged to operate the main supply pump and a second electric engine is arranged to operate the transfer pump. A valve device is arranged downstream of the transfer pump, which valve device has an inlet side connected with the transfer pump, and an outlet side connected with the main supply pump. The valve device comprises a body surrounding a valve block, with an inner channel between the inlet side and the outlet side, through which the fuel may flow. The valve block also comprises a first opening in connection with the inner channel, and a first fuel channel through which fuel is supplied from the first fuel tank to the main supply pump, and a second opening in connection with the inner channel, and a second fuel channel through which fuel is supplied from the second fuel tank to the first fuel tank. At normal operation the valve device's valve block is arranged to be in a first open state, in which the first and second fuel channels are connected with the inner channel. At operational disruptions in the main supply pump the valve device's valve block is arranged to be in a second, closed state, in which the first and the second openings are moved in relation to the first and second fuel channels, whereat the first and the second fuel channels are closed, and accordingly the fuel flow bypasses the first fuel tank. At operational disruptions in the transfer pump a float is arranged to close the first fuel channel, and accordingly the fuel flow bypasses the first fuel tank at operational disruptions in the transfer pump. At the same time, it is possible to supply fuel from the second fuel tank with any of the main supply pump or the transfer pump, whereat a simple redundancy for the fuel system is obtained.

Similar objectives are also achieved with a method to control a fuel system for an internal combustion engine according to the above. The method is characterised by the following steps:
a) identifying the main supply pump's and/or the transfer pump's functionality,
   - in the event of good functionality of the main supply pump and the transfer pump;
b) ensuring that a valve device, which is arranged downstream of the transfer pump, is arranged in a first open state, which allows the transfer pump to be connected with the first and the second fuel tank via the valve's second fuel channel, and allows the main supply pump to be connected with the first fuel tank, via the valve's first fuel channel,
c) supplying the first fuel tank with fuel, by operating the transfer pump with the second electric engine, to supply fuel from the second fuel tank, via the valve device, to the first fuel tank,
d) supplying fuel from the first fuel tank, through the valve device to the internal combustion engine, by way of operating the main supply pump with a second electric engine,
   - in the event of an identified operational disruption in the main supply pump:
e) optionally indicating to the driver that an operational disruption has been identified,
f) ensuring that the valve device is in a second state, in which the first and the second fuel conduits in the valve device are closed, which allows for the fuel flow to bypass the first fuel tank,
g) leading the fuel flow past the main supply pump, whereat the transfer pump is directly connected with the second fuel conduit, and supplying fuel from the second fuel tank via the second fuel conduit, by operating the transfer pump with the second electric engine, or
   - in the event of an identified operational disruption in the transfer pump:
h) optionally indicating to the driver that an operational disruption has been identified,
i) ensuring that the float closes the connection between the first fuel tank and the valve device, which allows the fuel flow to bypass the first fuel tank and allows the main supply pump to be connected with the first fuel conduit,
j) leading the fuel flow past the transfer pump, allowing for the main supply pump to be directly connected with the second fuel tank, and supplying fuel from the second fuel tank to the second fuel conduit, via the first fuel conduit, by operating the main supply pump with the first electric engine.

Similar objectives are also achieved with an internal combustion engine and a vehicle with such a fuel system.

Other advantages of the invention are set out in the detailed description below.

### BRIEF DESCRIPTION OF THE DRAWINGS

Below, as an example, a preferred embodiment of the invention is described with reference to the enclosed drawings, on which:
- Fig. 1: shows a schematic side view of a vehicle, which comprises a fuel system for an internal combustion engine according to the present invention,
- Fig. 2: shows a coupling diagram for a fuel system according to the present invention, and
- Fig. 3: shows a schematic drawing in partial cross-section of a valve device in a fuel system at normal operation, according to the present invention,
- Fig. 4: shows a schematic drawing in a partial cross-section of a valve device in a fuel system at operational disruption in a main supply pump, according to the present invention
- Fig. 5: shows a schematic drawing in a partial cross-section of a valve device in a fuel system at an operational disruption of the transfer pump, according to the present invention
- Fig. 6: shows a schematic drawing in a partial cross-section of another embodiment of the valve device in a fuel system
- Fig. 7: shows a flow chart for the method according to the present invention.

### DETAILED DESCRIPTION

According to the present invention, the fuel system thus comprises a valve device, which comprises a body surrounding a valve block. The valve block is arranged inside a valve body, and the valve block may move between a first open state and a second closed state in the body. This shift may for example occur via spring impact, and the valve device is thus mechanically controllable. By arranging a mechanically controllable valve device between the transfer pump and the main supply pump, facilitating direct supply of fuel from the second fuel tank to the internal combustion engine, with the help of any of a transfer pump or main supply pump in the fuel system, a redundancy is allowed in the fuel system.

By arranging the valve in connection with the transfer pump, so that the transfer pump is in connection with the second fuel conduit via the valve device, the transfer pump may supply fuel from the second fuel tank to the second fuel conduit, and further to the internal combustion engine. Should the main feed pump driven by an electric engine fail or provide too low a fuel flow, the transfer pump is used to transport fuel to the internal combustion engine.

By arranging the valve device in connection with the main supply pump, so that the valve device is connected with the first fuel conduit, the main supply pump may supply fuel from the second fuel tank to the second fuel conduit, and further along to the internal combustion engine. In this manner, one may use the main supply pump to transport fuel directly from the second fuel tank to the internal combustion engine if the transfer pump fails or provides too low a fuel flow.

The valve device may suitably be arranged in the first fuel tank. Thus, a non-bulky fuel system is achieved.

The main supply pump and the transfer pump suitably are low pressure pumps. The fuel flow and the pressure that the transfer pump and/or the main supply pump on its own is able to supply to the internal combustion engine is sufficient for the internal combustion engine to be operated with full or reduced effect, in order to drive the vehicle to a garage for repair. Thus a fuel system for an internal combustion engine is achieved, which reduces the risk of insufficient or non-existing fuel supply to the internal combustion engine in the event of an operational disruption. Similarly, a fuel system is achieved, which provides for a so-called limp home function, which enables the driver, despite a broken main supply pump, to drive the vehicle to the nearest garage.

The first fuel tank may be adapted so that it holds a smaller volume than the second fuel tank. For example, the first fuel tank may hold 20-50 litres and the second fuel tank 300-1000 litres. Thus, a non-bulky fuel system is achieved.

The main supply pump may be arranged in the first fuel tank. In this manner, the main supply pump is protected from the environment and a natural cooling of the fuel in the first fuel tank is obtained. Alternatively, the transfer pump and/or the valve device are also arranged inside the first fuel tank. With the main supply pump, the transfer pump and the valve device arranged inside the first fuel tank, a non-bulky fuel system is achieved.

Preferably, a first bypass conduit, comprising a first bypass valve device, is arranged in the main supply pump, in order to lead the fuel flow past the main supply pump, via the first bypass conduit, at an operational disruption in the main supply pump. In this manner, one may secure the fuel flow even if the main supply pump fails.

It is also preferred to arrange a second bypass conduit, comprising a second bypass conduit valve device, in the transfer pump, in order to lead the fuel flow past the transfer pump at an operational disruption in the transfer pump. In this manner, it is possible to secure the fuel flow even if the transfer pump fails.

The valve device according to the present invention is passive, i.e. it does not require any form of power feed and/or control signals from a control device for its function, and thus the valve device requires no or minimal service. The valve device preferably comprises a spring device, arranged to shift the valve block from the first open state to the second closed state, in which the connection between the valve device's inner channel and the first and second fuel channels is closed.

Suitably, the main feed pump and the transfer pump are connected to a control device via a CAN bus. The control device is adapted to obtain signals indicating the transfer pump's and/or the main supply pump's functionality via the CAN-bus. The control device may also obtain operational data from other parts of the vehicle via the CAN-bus, and similarly send signals to the other parts of the vehicle, and accordingly the control device may for example indicate to the driver that an operational disruption has been identified. Thus, a compact fuel system is achieved, which is easy to control, and thus provides for a correct fuel supply to the internal combustion engine.

A sensor device may be arranged, in such a way that it may identify the functionality of the main supply pump. For example, the sensor device may be arranged in connection with the second fuel conduit, and accordingly it becomes easy to identify the main supply pump's functionality. The sensor device is suitably a pressure sensor or a flow level sensor, which detects the fuel flow in the second fuel conduit, and which is connected to the control device via the CAN bus.

Alternatively, an operational disruption in the main feed pump is identified by detecting the function of the second electric engine. In the event the first electric engine ceases to function or operates with reduced power, there is a great probability that there may be an operational disruption in the main supply pump. The sensor device may in such case consist of an element that detects the function of the electric engine operating the pump, suitably by detecting the engine's power consumption.

Operational disruptions in the transfer pump may be detected by the control device, for example with the help of data from a level sensor, which may be placed in the first fuel tank, and which sends signals to the control device via the CAN bus. Another sensor, such as a flow level sensor, a pressure sensor and/or a sensor which detects the power consumption in a similar manner as in the main supply pump, may be connected to the transfer pump to detect its functionality as a complement, or as an alternative. Signals from these sensors are then sent to the control device via the CAN bus.

Suitably, some form of indication to the driver is activated when an operational disruption is identified in the main supply pump and/or the transfer pump. The driver is warned and may take measures to drive the vehicle to a garage. Thus, a fuel system is achieved, which allows for a simple management of an operational disruption.

At an identified operational disruption in the main supply pump, the transfer pump is arranged to supply fuel with a higher pressure than at normal operation. The control device may give a command to the transfer pump, and a higher supply pressure may be achieved, for example by way of a higher engine speed in the second electric engine, operating the transfer pump. The supply generated by the transfer pump in this case may be higher than the pressure required to overcome a spring force in a spring device of the valve device. Due to the supply pressure, the spring device is compressed and the valve block is moved from the first open state to the second closed state.

In order to further increase the hydraulic force impacting the spring device, the valve block may be designed so that the geometry of the valve block and the valve device contribute to increasing the hydraulic force. The valve block preferably comprises a form stable material such as plastic or metal, for example stainless steel. The valve block is surrounded by a body, which may also be made of a form stable material such as plastic or metal, for example stainless steel. The valve block may be designed so that it comprises an elongated cylinder shaped section with an inner channel, and so that it has a first surface facing the fuel flow on the inlet side, and a second surface facing the fuel flow on the outlet side. The area on the surface facing the fuel flow on the inlet side is suitably shaped in such a way that it is larger than the area on the outlet side, whereat e.g. an annular section may be formed on the cylinder shaped section's inlet side. The spring device may be arranged between this annular section and the valve device's body, which surrounds the valve block and the valve device. The valve device's body contains the valve block and follows the shape of this, and is arranged with a space that contains the spring device, between a body-wall and the annular section's surface on the opposite side of the inlet side. The body is designed so that it contains the movement of the valve block between the open and the closed state. The annular section allows the fuel flow to have a greater contact surface facing the valve block on the inlet side than on the outlet side. Thus, the fuel flow may generate a higher pressure against the valve block on the inlet side, and thus the spring device's spring force may be overcome and the spring device compressed. In this manner, the valve block is moved from the first open state to the second closed state, and the fuel flow bypasses the first fuel tank.

Alternatively, the valve block may be designed so that the valve block, which is surrounded by a body, comprises a central inner channel, and a first and a second opening. The central inner channel comprises a channel length between the inlet side and a second opening, having a smaller diameter than a channel length comprised between the outlet side and the second opening. The spring device may be arranged between a body-wall and the channel end on the outlet side. At operational disruptions in the main supply pump, the transfer pump supplies fuel with a higher supply pressure than at normal operation. Since the area of the channel lengths differ, a pressure fall is caused in the channel with the smaller diameter. Thus, the pressure on the valve block, which pressure impacts the spring device, becomes so large that it overcomes the spring device's spring force, whereat the spring device is impacted and compressed. Thus, the fuel flow may generate a higher pressure against the spring device than the spring device's spring force, and the spring device is compressed. In this manner, the valve block is moved from the first open state to the second closed state, and the fuel flow bypasses the first fuel tank.

When the valve block has been moved to the second closed state, the fuel flow bypasses the main supply pump, whereat the transfer pump stands in direct connection with a second fuel conduit, via which the fuel is supplied further along to the internal combustion engine. The transfer pump supplies fuel from the second fuel tank through the second fuel conduit, by way of the second electric engine operating the transfer pump.

At an identified operational disruption in the transfer pump, the main supply pump continues to supply fuel from the first fuel tank. Since no new fuel is supplied into the first fuel tank, the fuel level drops in the first fuel tank. A level sensor may be arranged to detect the fuel level in the first fuel tank, and an operational disruption may be confirmed by the control device if the fuel level does not rise despite power signals to the transfer pump. The first fuel channel is connected with a float, which closes the first channel's opening in the first fuel tank when the fuel level drops below a predetermined level. When the opening is closed, the fuel flow bypasses the first fuel tank, and the main supply pump is not in contact with the first fuel tank. Thus, the main supply pump begins to supply fuel directly from the second fuel tank. The control device may give a command to the main supply pump to supply fuel with a higher supply pressure, if and when required.

Suitably, the second fuel channel is equipped with a back valve device, which prevents the fuel's flow from the first fuel tank into the second fuel tank. In this way, a one-way fuel flow may be arranged in a simple manner.

Below, the fuel system's function is described with reference to the enclosed drawings.

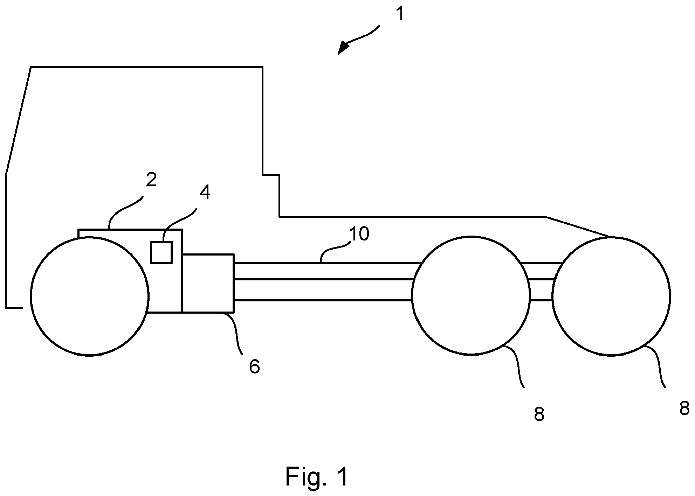

Fig. 1 shows a schematic side view of a vehicle 1, a vehicle which comprises a fuel system 4 for an internal combustion engine 2. The internal combustion engine 2 is connected to a gearbox 6, which is further connected to the driving wheels 8 of the vehicle 1 via a transmission. The vehicle also comprises a chassis 10.

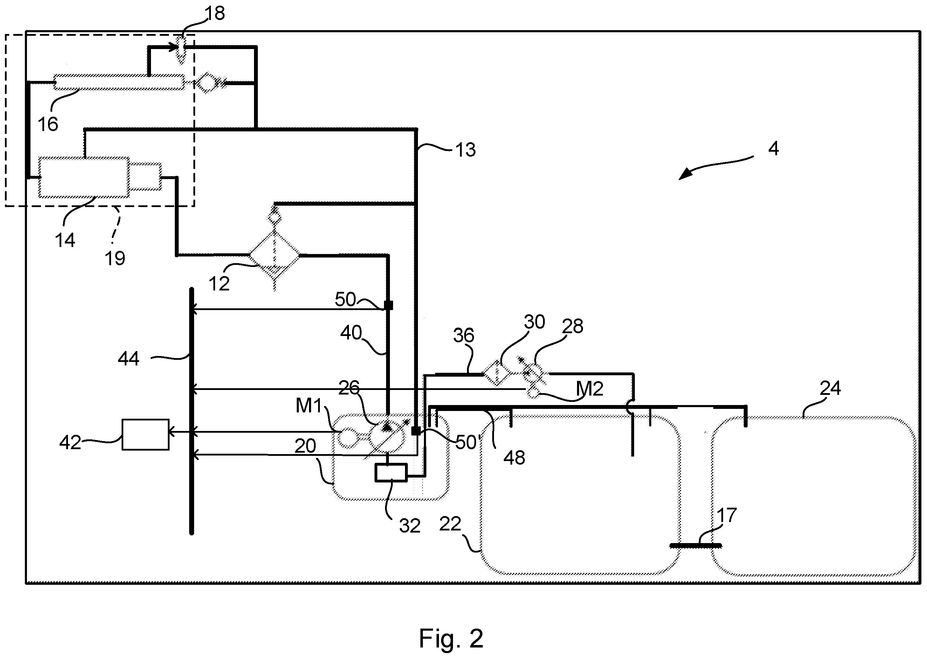

Fig. 2 shows a coupling diagram for an example fuel system 4 according to the present invention. The fuel system 4 is of the type which is also known as a common rail, and comprises several components, among which a main fuel filter 12, a high pressure pump 14, an accumulator in the form of a so-called common rail 16, and an injection system 18, schematically displayed in the form of a fuel injector, are arranged in the high pressure circuit 19 of the internal combustion engine 2. Alternatively, the fuel system may be replaced by another form of injection system, e.g. a piezo or a unit injection system. The fuel system 4 also comprises a first fuel tank 20 and a second fuel tank 22. In the example in Fig. 2, the fuel system also comprises a third fuel tank 24. The fuel system also comprises a main supply pump 26, a transfer pump 28, a pre-filter 30 and a valve device 32.

The main fuel filter 12 is arranged downstream of the main supply pump 26 and upstream of the high pressure pump 14 in the fuel system 4. The main fuel pump 26 is a low pressure pump, supplying the high pressure pump 14 with fuel at a low pressure. Further, the fuel system 4 comprises a return flow line 13 back to the first fuel tank 20, through which superfluous fuel returns from the injection system 18, the common rail 16, the high pressure pump 14 and the main fuel filter 12.

The first fuel tank 20 is adapted to hold a smaller volume than the second fuel tank 22 and the third fuel tank 24. The second fuel tank 22 and the third fuel tank 24 hold substantially the same volume, and may have a self-regulating flow between each other, via for example a connection conduit (not displayed) arranged between the lower part of the second fuel tank 22 and the third fuel tank 24. The transfer pump 28 is, according to Fig. 2, arranged between the first fuel tank 20 and the second fuel tank 22, but it may also be arranged in the first fuel tank 20. The transfer pump 28 is operated by a second electrical engine M2, and its main task is to supply fuel from the second fuel tank 22 to the first fuel tank 20, via a first fuel conduit 36. Between the first fuel tank 20 and the second fuel tank 22 an excess conduit 48 is arranged, so that fuel may be transported from the first fuel tank 20 to the second fuel tank 22, if the first fuel tank 20 becomes overfilled. The second fuel tank 22 and the third fuel tank 24 are connected via a connecting conduit 17. The main supply pump 26 is arranged inside the first fuel tank 20, and is thus protected from the environment and cooled by the fuel. The main supply pump 26 is operated by a first electric engine M1, and supplies the fuel from the first fuel tank 20, via a second fuel conduit 40, through the main fuel filter 12, and further to the high pressure pump 14. The fuel is then fed, at a high pressure, to the common rail 16 and further along to the injection system 18. The main feeding pump 26 and the transfer pump 28 are controlled by a control device 42 via a CAN bus 44.

The pre-filter 30 is arranged downstream of the transfer pump 28, and prefilters the fuel which is fed from the second fuel tank 22. The valve device 32 is arranged downstream of the pre-filter 30, and comprises an inlet side connected with the transfer pump 28 via the first fuel conduit 36. The valve device 32 has an outlet side connected with the main supply pump 26, which in turn is connected with the second fuel conduit 40.

A pressure sensor 50 is arranged in connection with the second fuel conduit 40. The pressure sensor 50 identifies the fuel flow in the second fuel conduit 40, and may thus determine whether there is an operational disruption in the main supply pump 26. It is also possible to identify an operational disruption in the main supply pump 26 through a sensor device that detects the function of the first electric engine M1. In the event the first electric engine M1 ceases to function or operates with reduced power, there is a great probability that there may be an operational disruption in the main supply pump 26. An operational disruption in the first electric engine may be detected with a sensor device that detects the engine's power consumption. A level sensor 50' is arranged in the first fuel tank and detects the fuel level. Signals from these sensors 50, 51 are sent via the CAN-bus 44 to the control device 42, which may the send commands to the main supply pump 26 or the transfer pump 28, or to other components in the fuel system 4. In the interest of clarity, the control device 42 and the CAN bus 44 are displayed only in Fig. 2, but applied in all the embodiments in Fig. 1 and Fig. 3-7.

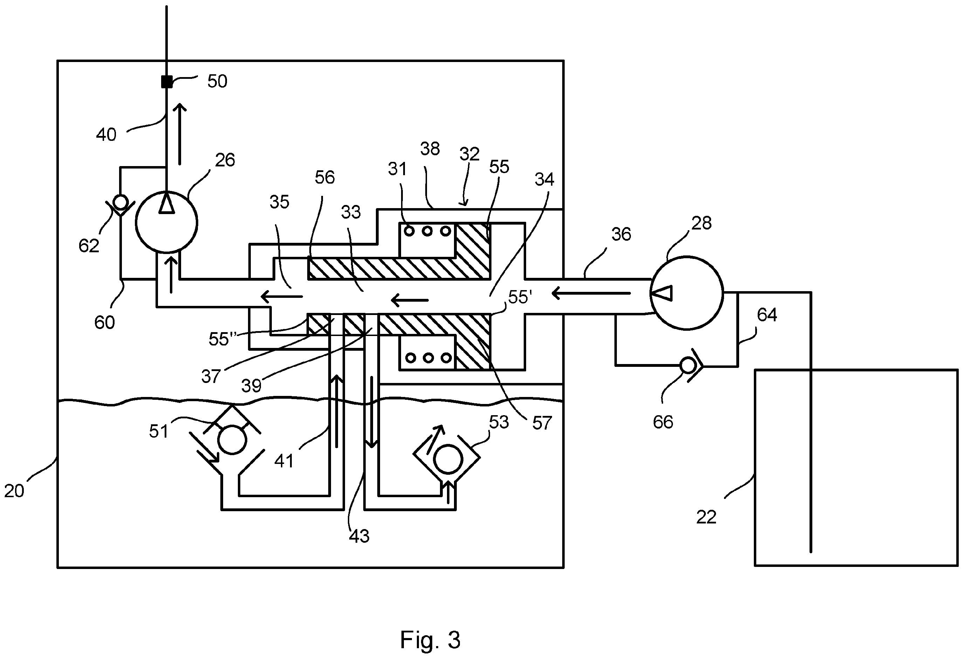

Fig. 3 shows the function of the valve device 32 at normal operation in the fuel system 4. The transfer pump 28 supplies fuel from the second fuel tank 22 to the first fuel tank 20, through the first fuel conduit 36 and via the inlet side 34 of the valve device 32. The valve device 32 comprises a valve body 38, surrounding a valve block 55. The valve block 55 of the valve device 32 is designed so that it comprises an elongated cylinder shaped section 56 with an inner channel 33, and it has a first surface 55' facing the fuel flow on the inlet side 34, and a second surface 55" facing the fuel flow on the outlet side 35. The area on the surface 55' facing the fuel flow is larger on the inlet side 34, than is the area on the surface 55" on the outlet side 35, whereby an annular section 57 is formed on the inlet side 34 of the cylinder shaped section 56. The spring device 31 may be arranged between this annular section 57 and the valve device's body 38, which surrounds the valve block 55 and the valve device 32. The valve device's body 38 contains the valve block 55 and follows the shape of this, and it is arranged with a space that contains the spring device 31 between a body-wall and the annular section's 57 surface, which is on the opposite side in relation to the inlet side 34. The body 38 is designed so that it contains the movement of the valve block 55 between the open and the closed state. The annular section 57 allows for the fuel flow to have a greater contact surface facing the valve block 55 on the inlet side 34 than on the outlet side 35.

The fuel is led into the valve block's 55 inner channel 33, comprising two openings 37 and 39. The first opening 37 is connected with the inner channel 33 and a first fuel channel 41, via which fuel is supplied from the first fuel tank 20 to the main supply pump 26. The valve block 55 also comprises a second opening 39, which is connected with the inner channel 33 and a second fuel channel 43, via which fuel is supplied from the second fuel tank 22 to the first fuel tank 20. At normal operation the valve block 55 of the valve device 32 is arranged to be in a first open state, in which the first and second fuel channels 41, 43 are connected with the inner channel 33. In the open first state, the spring device 31 is in a normal resting state.

The main supply pump 26 pumps the fuel further from the first fuel tank 20, via the outlet side 35 of the valve device 32, to the second fuel conduit 40 and further to the internal combustion engine. A float or another floating body 51 is arranged in connection with the first fuel channel's 41 end in the first fuel tank 20. At normal operation the float 51 is in an open state, when the fuel level is at normal height in the first fuel tank 20. A back valve device 53 is arranged in connection with the second fuel channel's 43 end in the first fuel tank 20, and at normal operation the back valve device 53 is open and the fuel may flow through the back valve device 53, from the second fuel channel 43 into the first fuel tank 20, as displayed by the arrows in Fig. 3. At normal operation the fuel flows through the transfer pump 28 and the main supply pump 26. At normal operation the bypass conduit 64 of the transfer pump 28 and the bypass conduit valve device 66, as well as the bypass conduit 60 of the main supply pump 26 and the bypass conduit valve device 62, are in a passive state.

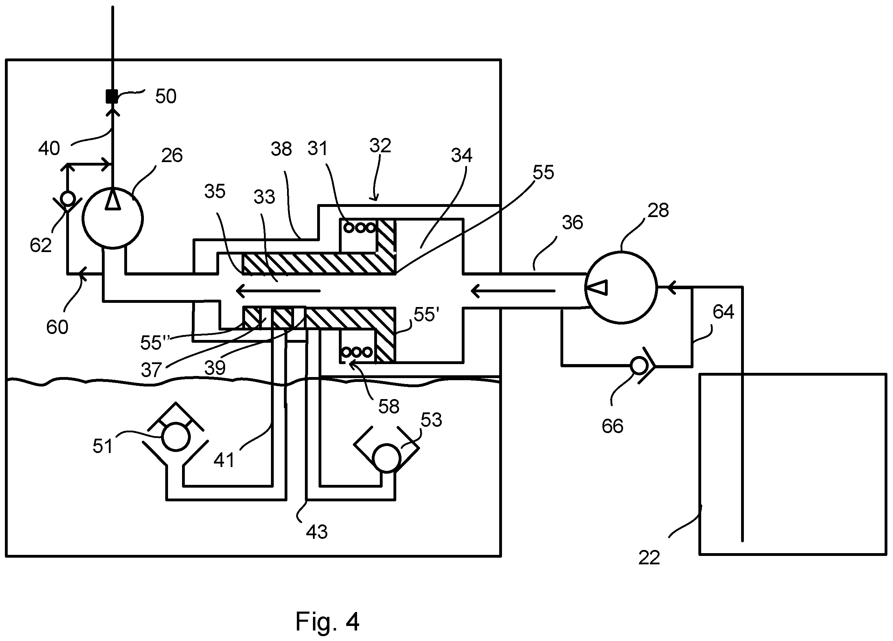

Fig. 4 schematically shows the fuel system's 4 function at operational disruptions or outages in the main supply pump 26. At an operational disruption in the main supply pump 26, the valve block 55 of the valve device 32 is arranged to be in a second, closed state, by way of the control device 42 controlling the transfer pump 28 to supply fuel with an increased supply pressure. As described above, the valve block's 55 shape also contributes to facilitate an increase in the pressure against the spring device 31. Fig. 4 shows that a drainage opening 58 is arranged in the valve body 38, in order to empty the space wherein the spring device 31 is arranged of fuel, so that the spring device may be compressed. At increased pressure, the spring device 31 is thus compressed and the valve block 55 is moved to the second, closed state (from right to left in Fig. 4). Thus, the first and second openings 37, 39 are moved in relation to the first and second fuel channels 41, 43, whereby the first and the second fuel channels 41, 43 are closed. When the fuel channels 41 and 43 are closed, the fuel flow bypasses the first fuel tank 20 and no new fuel may come in or out of the first fuel tank 20. The valve device 32 according to the present invention is passive, i.e. it does not require any form of power feed and/or control signals from a control device for its function, e.g. when the valve block 55 of the valve device 32 is to be arranged from the first open state to the second closed state. The fuel flow bypasses the main supply pump 26 via a bypass conduit 60 and the bypass conduit valve 62, and thus the transfer pump 28 pumps fuel with an increased supply pressure, from the second fuel tank 22 directly to the second fuel conduit 40 and further to the internal combustion engine. The fuel flow and the pressure that the transfer pump 28 is able to supply to the internal combustion engine 2 is sufficient for the internal combustion engine 2 to be driven with full or reduced effect, with the objective of driving the vehicle to a garage for repair.

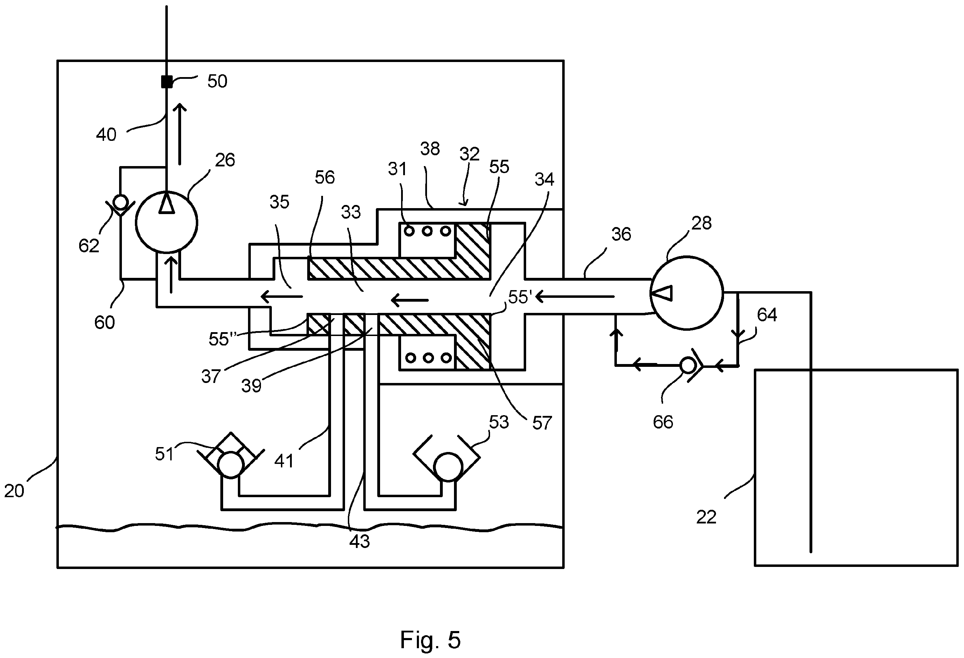

Fig. 5 schematically shows the fuel system's 4 function at operational disruptions or outages in the transfer pump 28. At an identified operational disruption in the transfer pump 28, the main supply pump 26 continues to supply fuel from the first fuel tank 20 as long as possible. Since no new fuel is supplied into the first fuel tank 20, the fuel level drops in the first fuel tank 20. A level sensor 50' (see Fig. 2) may be arranged to detect the fuel level in the first fuel tank 20, and an operational disruption may be confirmed by the control device 42 if the fuel level does not rise despite power signals to the transfer pump 28. The first fuel channel 41 is connected with a float 51, which closes the first channel's 41 opening in the first fuel tank 20, when the fuel level drops below a predetermined level. When the opening is closed, the fuel flow bypasses the first fuel tank 20, and the main supply pump 26 is not in contact with the first fuel tank 20. The fuel flow bypasses the transfer pump 28, via a bypass conduit 64 and a bypass conduit valve 66. Thus, the main supply pump 26 begins to supply fuel directly from the second fuel tank 22. The control device 42 (see Fig. 2) may give a command to the main supply pump 26 to supply fuel with a higher supply pressure, if required. The fuel flow and the pressure that the main supply pump 26 is able to supply to the internal combustion engine 2 is sufficient for the internal combustion engine 2 to be operated with full or reduced effect, with the objective of driving the vehicle to a garage for repair. In one embodiment, the control device 42 may, with knowledge about the engine's average fuel consumption and the engine's fuel requirement, calculate a distance which the vehicle may drive in limp home function, and present this available distance to the driver. In order to extend this distance, the control device may be adapted to initiate a shut-off of some of the engine's attachments, such as air conditioning units and similar, in order to reduce the engine's fuel consumption.

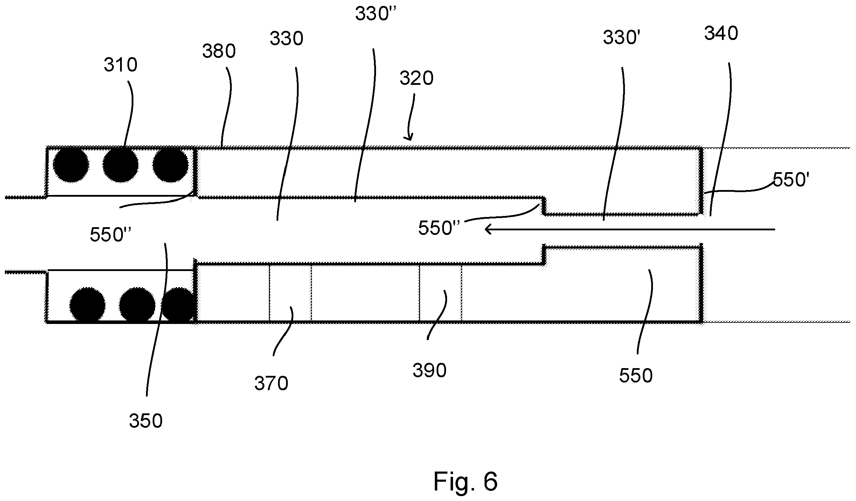

Fig. 6 shows another embodiment of the valve device 320 with a valve body 380, surrounding a valve block 550, having a surface 550' facing the fuel flow on the inlet side 340 and surfaces 550" on the outlet side 350. The valve device 320 functions in a similar manner as the valve device 32 above, but has a different construction. In this embodiment, the valve device 320 comprises a valve block 550 with an inner channel 330, which has different inner dimensions in the valve block's 550 longitudinal axial direction. The valve block comprises a first opening 370 and a second opening 390. The inner channel 330 comprises a first inner channel length 330' and a second inner channel length 330". The first inner channel length 330', which is the part that extends between the inlet side 340 and the second opening 390, has a smaller diameter than the second inner channel length 330", extending between the outlet side 350 and the second opening 390. Since the area of the channel lengths differ, a pressure fall is caused in the channel length 330' with the smaller diameter. Thus, the pressure on the valve block 550, which impacts the spring device 310, becomes so large that it overcomes the spring device's 310 spring force, whereat the spring device 310 is impacted and compressed. In this manner, the valve block 550 is moved from the first open state to the second closed state, and the fuel flow bypasses the first fuel tank 20.

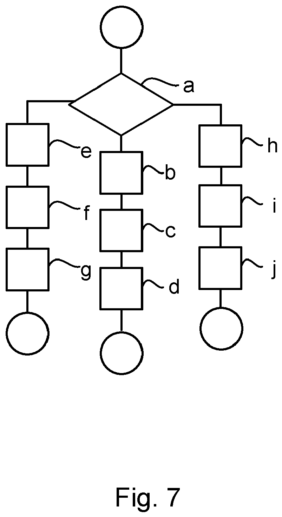

Fig. 7 shows a flow chart of a method to control the fuel system 4. The method comprises the steps
a) identifying the main supply pump's 26 and/or the transfer pump's 28 functionality,
   - in the event of good functionality of the main supply pump 26 and the transfer pump 28;
b) ensuring that a valve device 32, which is arranged downstream of the transfer pump 28, is arranged in a first open state, which allows the transfer pump 28 to be connected with the first and the second fuel tank 20, 22 via the valve's second fuel channel 43, and allows the main supply pump 26 to be connected with the first fuel tank 20, via the valve's first fuel channel 41,
c) supplying the first fuel tank 20 with fuel, by operating the transfer pump 28 with the second electric engine M2, to supply fuel from the second fuel tank 22, via the valve device 32, to the first fuel tank 20,
d) supplying fuel from the first fuel tank 20, through valve device 32 to the internal combustion engine 2, by way of operating the main supply pump 26 with a first electric engine M1,
   - in the event of an identified operational disruption in the main supply pump 26;
e) optionally indicating to the driver that an operational disruption has been identified,
f) ensuring that the valve device 32 is in a second state, in which the first and the second fuel channels 41, 43 in the valve device 32 are closed, which allows the fuel flow to bypass the first fuel tank 20,
g) leading the fuel flow past the main supply pump 26, whereat the transfer pump 28 is directly connected with the second fuel conduit 40, and supplying fuel from the second fuel tank 22 via the second fuel conduit 40, by operating the transfer pump 28 with the second electric engine M2,
   or
   - in the event of an identified operational disruption in the transfer pump 28;
h) optionally indicating to the driver that an operational disruption has been identified,
i) ensuring that the float 51 closes the connection between the first fuel tank 20 and the valve device 32, which allows the fuel flow to bypass the first fuel tank 20 and allows the main supply pump 26 to be connected with the first fuel conduit 36,
j) leading the fuel flow past the transfer pump 26, allowing the main supply pump 28 to be directly connected with the second fuel tank 22, and supplying fuel from the second fuel tank 22 to the second fuel conduit 40, via the first fuel conduit 36, by operating the main supply pump 26 with the first electric engine M1.

Indication of an identified operational disruption may, in a further developed embodiment, comprise an indication to the driver of the available driving distance that a vehicle may be driven. In such a case, the method may comprise a step for the calculation of an available driving distance, based on the known fuel consumption. Analogously, in an internal combustion engine that is used in other applications, a remaining operating time for the internal combustion engine, when driven with an indicated operational disruption, may be presented. In such a case, the method may comprise a step for the calculation of a remaining operating time.

In a further developed embodiment, in the event of an indication of an identified operational disruption, the method may comprise a step which reduces the engine's fuel consumption by initiating a shut-off of certain attachments driven by the engine, e.g. a compressor for air conditioning.

The components and features specified above may, within the framework of the invention, be combined between different embodiments specified.

## Claims

1. Fuel system (4) for an internal combustion engine (2), which fuel system (4) comprises a first fuel tank (20), a second fuel tank (22), a first fuel conduit (36), arranged in connection with the first fuel tank (20) and the second fuel tank (22), a second fuel conduit (40), arranged in connection with the first fuel tank (20) and the internal combustion engine (2), a main supply pump (26) and a transfer pump (28), wherein the main supply pump (26) is arranged to supply fuel from the first fuel tank (20) via the second fuel conduit (40), and wherein the transfer pump (28) is arranged to supply fuel from the second fuel tank (22) to the first fuel tank (20) via the first fuel conduit (36), wherein a first electric engine (M1) is arranged to operate the main supply pump (26) and a second electric engine (M2) is arranged to operate the transfer pump (28), a valve device (32) is arranged downstream of the transfer pump (28), which valve device (32) has an inlet side (34) connected with the transfer pump (28), and an outlet side connected with the main supply pump (26), **characterised in that** the valve device (32; 320) comprises a body surrounding a valve block (55; 550), with an inner channel (33; 330) between the inlet side (34; 340) and the outlet side (35;350), via which the fuel may flow, with a first opening (37; 370) connected with the inner channel (33; 330), and a first fuel channel (41), through which fuel is supplied from the first fuel tank (20) to the main supply pump (26), and a second opening (39; 390) connected with the inner channel (33;330) and a second fuel channel (43), through which fuel is supplied from the second fuel tank (22) to the first fuel tank (20), wherein the valve block (55; 550) of the valve device (32) is arranged to be in a first open state at normal operation, during which the first and the second fuel channels (41, 43) are connected with the inner channel (33; 330) and wherein
- at operational disruptions in the main supply pump (26), the valve block (55; 550) of the valve device (32) is arranged to be in a second, closed state, during which the first and the second openings (37, 39; 370, 390) are moved in relation to the first and second fuel channels (41, 43), wherein the first and the second fuel channels (41, 43) are closed, or
- wherein, at an operational disruption in the transfer pump (28), a float (51) is arranged to close the first channel (41);
so that the fuel flow bypasses the first fuel tank (20).

2. Fuel system (4) according to claim 1, **characterised in that** a first bypass conduit (60), comprising a first bypass conduit valve (62), is arranged in the main supply pump (26), in order to lead the fuel flow past the main supply pump (26) at an operational disruption in the main supply pump (26).

3. Fuel system (4) according to claim 1 or 2, **characterised in that** a second bypass conduit (64), comprising a second bypass conduit valve (66), is arranged in the transfer pump (28), in order to lead the fuel flow past the transfer pump (28) at an operational disruption in the transfer pump (28).

4. Fuel system (4) according to any of the previous claims, **characterised in that** the valve device (32; 320) comprises a spring device (31; 310), arranged to move the valve block (55; 550) from the first, open state to the second, closed state, in which the connection between the inner channel (33; 330) and the first and second fuel chambers (41, 42) is closed.

5. Fuel system (4) according to claim 4, **characterised in that** the valve block (55) comprises a surface (55') facing the fuel flow on the inlet side, and a surface (55") facing the fuel flow on the outlet side (55"), wherein the surface (55') on the inlet side (34) is larger than the surface (55") on the outlet side (35).

6. Fuel system (4) according to claim 4, **characterised in that** the valve block (550), which is surrounded by a valve body (380), comprises a central inner channel (330), and a first opening (370) and a second opening (390), wherein the central channel (330) comprises a channel length between the inlet side (340) and the second opening (390), which has a smaller diameter than a channel length comprised between the outlet side (350) and the second opening (390).

7. Fuel system (4) according to any of the previous claims, **characterised in that** the first fuel channel (41) is connected with a float (51), which closes the first channel's (41) opening in the first fuel tank (20), when the fuel level drops below a predetermined level.

8. Fuel system (4) according to any of the previous claims, **characterised in that** the second fuel channel (43) is equipped with a back valve (53), preventing the fuel from flowing from the first fuel tank (20) into the second fuel tank (43).

9. Fuel system (4) according to any of the previous claims, **characterised in that** a sensor device (50; 50') is arranged in such a way that it may identify the functionality of the main supply pump (26) and/or the transfer pump (28).

10. Fuel system according to claim 9, **characterised in that** the sensor device (50) comprises a pressure sensor, which is arranged in the second fuel conduit (40).

11. Fuel system according to claim 9, **characterised in that** the sensor device is arranged to detect the function of the first electric engine motor (M1) that operates the main supply pump (26) or the transfer pump (28), preferably by detecting its power consumption.

12. Internal combustion engine (2) **characterised in that** it comprises a fuel system (4) according to any of claims 1-11.

13. Vehicle (1), **characterised in that** it comprises a fuel system (4) according to any of claims 1-11.

14. Method to control a fuel system (4) for an internal combustion engine (2) according to any of claims 1-11, **characterised by** the following steps:
a) identifying the main supply pump's (26) and/or the transfer pump's (28) functionality,
- in the event of good functionality of the main supply pump (26) and the transfer pump (28);
b) ensuring that the valve device (32; 320), which is arranged downstream of the transfer pump (28), is arranged in a first open state, which allows the transfer pump (28) to be connected with the first and the second fuel tank (20, 22) via the valve's second fuel channel (43) and the main supply pump (26) to be connected with the first fuel tank (20) via the valve's first fuel channel (41),
c) supply the first fuel tank (20) with fuel by operating the transfer pump (28) with the second electric motor (M2) to supply fuel from the second fuel tank (22) via the valve device (32) to the first fuel tank (20),
d) supply fuel from the first fuel tank (20) through the valve device (32) to the internal combustion engine (2) by way of operating the main supply pump (26) with a first electric motor (M1),
- in the event of an identified operational disruption in the main feed pump (26);
e) optionally indicate to the driver that an operational disruption has been identified,
f) ensure that the valve device (32; 320) is in a second state, in which the first and the second fuel channels (41, 43) in the valve device (32; 320) are closed, which allows the fuel flow to bypass the first fuel tank (20),
g) leading the fuel flow past the main supply pump (26), whereat the transfer pump (28) is in direct connection with the second fuel conduit (40), and supplying fuel from the second fuel tank (22) via the second fuel conduit (40), by operating the transfer pump (28) with the second electric engine (M2),
or
- in the event of an identified operational disruption in the transfer pump (28);
h) optionally indicating to the driver that an operational disruption has been identified,
i) ensuring that the float (51) closes the connection between the first fuel tank (20) and the valve device (32), which allows the fuel flow to bypass the first fuel tank (20) and allows the main supply pump (26) to be connected with the first fuel conduit (36),
j) leading the fuel flow past the transfer pump (26), allowing the main supply pump (28) to be directly connected with the second fuel tank (22), and supplying fuel from the second fuel tank (22) to the second fuel conduit (40), via the first fuel conduit (36), by operating the main supply pump (26) with the first electric engine (M1).

## Patentansprüche

1. Kraftstoffsystem (4) für einen Motor mit innerer Verbrennung (2), wobei das Kraftstoffsystem (4) aufweist: einen ersten Kraftstofftank (20), einen zweiten Kraftstofftank (22), eine erste Kraftstoffleitung (36), die in Verbindung mit dem ersten Kraftstofftank (20) und dem zweiten Kraftstofftank (22) angeordnet ist, eine zweite Kraftstoffleitung (40), die in Verbindung mit dem ersten Kraftstofftank (20) und dem Motor mit innerer Verbrennung (2) angeordnet ist, eine Haupt-Förderpumpe (26) und eine Neben-Förderpumpe (28) aufweist, wobei die Haupt-Förderpumpe (26) zur Zufuhr von Kraftstoff aus dem ersten Kraftstofftank (20) durch die zweite Kraftstoffleitung (40) eingerichtet ist, und wobei die Neben-Förderpumpe (28) zur Zufuhr von Kraftstoff aus dem zweiten Kraftstofftank (22) über die erste Kraftstoffleitung (36) in den ersten Kraftstofftank (20) eingerichtet ist, wobei ein erster Elektromotor (M1) für den Betrieb der Haupt-Förderpumpe (26) und ein zweiter Elektromotor (M2) für den Betrieb der Neben-Förderpumpe (28) eingerichtet ist, eine Ventileinrichtung (32) stromabwärts der Neben-Förderpumpe (28) angeordnet ist, wobei die Ventileinrichtung (32) eine Einlassseite (34) hat, die mit der Neben-Förderpumpe (28) verbunden ist, und eine Auslassseite, die mit der Haupt-Förderpumpe (26) verbunden ist, **dadurch gekennzeichnet, dass** die Ventileinrichtung (32; 320) einen einen Ventilblock (55; 550) umgebenden Körper aufweist mit einem inneren Kanal (33; 330) zwischen der Einlassseite (34; 340) und der Auslassseite (34; 350), durch den der Kraftstoff strömen kann, mit einer ersten Öffnung (37; 370), die mit dem inneren Kanal (33; 330) verbunden ist, und einen ersten Kraftstoffkanal (41), durch den der Haupt-Förderpumpe (26) Kraftstoff aus dem ersten Kraftstofftank (20) zugeführt wird, und eine zweite Öffnung (39; 380), die mit dem inneren Kanal (33; 330) und einem zweiten Kraftstoffkanal (43) verbunden ist, durch den Kraftstoff aus dem zweiten Kraftstofftank (22) dem ersten Kraftstofftank (20) zugeführt wird, wobei der Ventilblock (55; 550) der Ventileinrichtung (32) so angeordnet ist, dass er sich im Normalbetrieb in einem ersten offenen Zustand befindet, während dem der erste und der zweite Kraftstoffkanal (41, 43) mit dem inneren Kanal (33; 330) verbunden sind, und wobei - bei Betriebsstörungen der Haupt-Förderpumpe (26) der Ventilblock (55; 550) der Ventileinrichtung (32) so angeordnet ist, dass er sich in einem zweiten geschlossenen Zustand befindet, während dem die erste und die zweite Öffnung (37, 39; 370, 390) relativ zum ersten und zum zweiten Kraftstoffkanal (41, 43) verschoben werden, wobei der erste und der zweite Kraftstoffkanal (41, 43) geschlossen sind, oder - wobei bei einer Betriebsstörung der Neben-Förderpumpe (28) ein Schwimmer (51) so angeordnet ist, dass er den ersten Kanal (41) verschließt, so dass der Kraftstoff den ersten Kraftstofftank (20) umgeht.

2. Kraftstoffsystem (4) nach Anspruch 1, **dadurch gekennzeichnet, dass** eine erste Umgehungsleitung (60) mit einem ersten Umgehungsleitungsventil (62) in der Haupt-Förderpumpe (26) angeordnet ist, um den Kraftstoff bei einer Betriebsstörung der Haupt-Förderpumpe (26) an der der Haupt-Förderpumpe (26) vorbeizuleiten.

3. Kraftstoffsystem (4) nach Anspruch 1 oder 2, **dadurch gekennzeichnet, dass** eine zweite Umgehungsleitung (64) mit einem zweiten Umgehungsleitungsventil (66) in der Neben-Förderpumpe (28) angeordnet ist, um den Kraftstoff bei einer Betriebsstörung der Neben-Förderpumpe (28) an der der Neben-Förderpumpe (28) vorbeizuleiten.

4. Kraftstoffsystem (4) nach einem der vorigen Ansprüche, **dadurch gekennzeichnet, dass** die Ventileinrichtung (32; 320) eine Federeinrichtung (31; 310) aufweist, die zum Verschieben des Ventilblocks (55; 550) aus dem ersten offenen Zustand in den zweiten geschlossenen Zustand eingerichtet ist, in dem die Verbindung zwischen dem inneren Kanal 33; 330) und dem ersten und dem zweiten Kraftstoffkanal (41, 42) geschlossen ist.

5. Kraftstoffsystem (4) nach Anspruch 4, **dadurch gekennzeichnet, dass** der Ventilblock (55) eine Oberfläche (55') aufweist, die zum Kraftstoffstrom an der Einlassseite weist, und eine Oberfläche (55"), die zum Kraftstoffstrom an der Auslassseite (35) weist, wobei die Oberfläche (55') an der Einlassseite (34) größer ist als die Oberfläche (55") an der Auslassseite (35).

6. Kraftstoffsystem (4) nach Anspruch 4, **dadurch gekennzeichnet, dass** der von einem Ventilkörper (380) umgebene Ventilblock (550) einen zentralen inneren Kanal (330) und eine erste Öffnung (370) sowie eine zweite Öffnung (390) aufweist, wobei der zentrale Kanal (330) eine Kanallänge zwischen der Einlassseite (340) und der zweiten Öffnung (390)
hat, deren Durchmesser kleiner ist die Kanallänge zwischen der Auslassseite (350) und der zweiten Öffnung (390).

7. Kraftstoffsystem (4) nach einem der vorigen Ansprüche, **dadurch gekennzeichnet, dass** der erste Kraftstoffkanal (41) mit einem Schwimmer (51) verbunden ist, der die Öffnung des ersten Kanals (41) im ersten Kraftstofftank (20) verschließt, wenn der Kraftstoffpegel unter einen vorgegebenen Pegel sinkt.

8. Kraftstoffsystem (4) nach einem der vorigen Ansprüche, **dadurch gekennzeichnet, dass** der zweite Kraftstoffkanal (43) mit einem Rückschlagventil (53) ausgerüstet ist, das verhindert, dass der Kraftstoff aus dem ersten Kraftstofftank (20) in den zweiten Kraftstofftank (22) strömt.

9. Kraftstoffsystem (4) nach einem der vorigen Ansprüche, **dadurch gekennzeichnet, dass** eine Sensoreinrichtung (50; 50') so eingerichtet ist, dass sie die Funktionalität der Haupt-Förderpumpe (26) und/oder der Neben-Förderpumpe (28) identifizieren kann.

10. Kraftstoffsystem nach Anspruch 9, **dadurch gekennzeichnet, dass** die Sensoreinrichtung (50) einen Drucksensor aufweist, der in der zweiten Kraftstoffleitung (40) angeordnet ist.

11. Kraftstoffsystem nach Anspruch 9, **dadurch gekennzeichnet, dass** die Sensoreinrichtung zum Detektieren der Funktion des ersten Elektromotors (M1) eingerichtet ist, der die Haupt-Förderpumpe (26) oder die Neben-Förderpumpe (28) antreibt, vorzugsweise durch die Detektion seiner Leistungsaufnahme.

12. Motor mit innerer Verbrennung (2), **dadurch gekennzeichnet, dass** er ein Kraftstoffsystem (4) nach einem der Ansprüche 1 bis 11 aufweist.

13. Fahrzeug (1), **dadurch gekennzeichnet, dass** es ein Kraftstoffsystem (4) nach einem der Ansprüche 1 bis 11 aufweist.

14. Verfahren zum Steuern eines Kraftstoffsystems (4) für einen Motor mit innerer Ver brennung (2) nach einem der Ansprüche 1 bis 11, **gekennzeichnet durch** die folgenden Schritte:
a) Identifizieren der Funktionalität der Haupt-Förderpumpe (26) und/oder der Neben-Förderpumpe (28);
- bei guter Funktionalität der Haupt-Förderpumpe (26) und der Neben-Förderpumpe (28):
b) Sicherstellen, dass die Ventileinrichtung (32; 320), die stromabwärts der Neben-Förderpumpe (28) angeordnet ist, einen ersten offenen Zustand einnimmt, der es gestattet, dass die Neben-Förderpumpe (28) mit dem ersten und dem zweiten Kraftstofftank (20, 22) über den zweiten Kraftstoffkanal (42) des Ventils verbunden ist, und die Haupt-Förderpumpe (26) über den ersten Kraftstoffkanal (41) des Ventils mit dem ersten Kraftstofftank (20) verbunden ist,
c) Zuführen von Kraftstoff in den ersten Kraftstofftank (20) durch den Betrieb der Neben-Förderpumpe (28) mittels des zweiten Elektromotors (M2), um dem ersten Kraftstofftank (20) Kraftstoff aus dem zweiten Kraftstofftank (22) über die Ventileinrichtung (32) zuzuführen,
d) Zuführen von Kraftstoff aus dem ersten Kraftstofftank (20) über die Ventileinrichtung (32) zum Motor mit innerer Verbrennung (2) durch den Betrieb der Haupt-Förderpumpe (26) mittels des ersten Elektromotors (M1),
- im Fall einer identifizierten Betriebsstörung der Haupt-Förderpumpe (26):
e) optionale Meldung an den Fahrer, dass eine Betriebsstörung identifiziert worden ist,
f) Sicherstellen, dass die Ventileinrichtung (32; 320) einen zweiten Zustand einnimmt, in dem der erste und der zweite Kraftstoffkanal (41, 43) der Ventileinrichtung (32; 320) geschlossen sind, so dass der Kraftstoffstrom den ersten Kraftstofftank (20) umgehen kann,
g) Führen des Kraftstoffs an der Haupt-Förderpumpe (26) vorbei, wobei die Neben-Förderpumpe (28) in direkter Verbindung mit der zweiten Kraftstoffleitung (40) steht, und Zuführen von Kraftstoff aus dem zweiten Kraftstofftank (22) durch die zweite Kraftstoffleitung (40) durch Antreiben der Neben-Förderpumpe (28) (28) mittels des zweiten Elektromotors (M2),
oder
- im Fall einer identifizierten Betriebsstörung der Neben-Förderpumpe (28):
h) optionale Meldung an den Fahrer, dass eine Betriebsstörung identifiziert worden ist,
i) Sicherstellen, dass der Schwimmer (51) die Verbindung zwischen dem ersten Kraftstofftank (20) und der Ventileinrichtung (32) verschlossen hat, so dass der Kraftstoffstrom den ersten Kraftstofftank (20) umgehen und die Haupt-Förderpumpe (26) mit der ersten Kraftstoffleitung (36) verbunden werden kann,
j) Führen des Kraftstoffs an der Neben-Förderpumpe (26) vorbei, wobei die Haupt-Förderpumpe (28) in direkter Verbindung mit dem zweiten Kraftstofftank (22) steht, und Zuführen von Kraftstoff aus dem zweiten Kraftstofftank (22) in die zweite Kraftstoffleitung (40) über die erste Kraftstoffleitung (36) durch Antreiben der Haupt-Förderpumpe (26) mittels des ersten Elektromotors (M1).

## Revendications

1. Circuit de carburant (4) pour un moteur à combustion interne (2), lequel circuit de carburant (4) comprend un premier réservoir de carburant (20), un second réservoir de carburant (22), un premier conduit de carburant (36), agencé pour être raccordé au premier réservoir de carburant (20) et au moteur à combustion interne (2), une pompe d'alimentation principale (26) et une pompe de transfert (28),
dans lequel la pompe d'alimentation principale (26) est agencée pour alimenter du carburant depuis le premier réservoir de carburant (20) via le second conduit de carburant (40), et dans lequel la pompe de transfert (28) est agencée pour alimenter du carburant du second réservoir de carburant (22) au premier réservoir de carburant (20) via le premier conduit de carburant (36),
un premier moteur électrique (M1) étant agencé pour actionner la pompe d'alimentation principale (26) et un second moteur électrique (M2) étant agencé pour actionner la pompe de transfert (28), un dispositif soupape (32) étant disposé en aval de la pompe de transfert (28), lequel dispositif soupape (32) présente un côté admission (34) raccordé à la pompe de transfert (28) et un côté sortie raccordé à la pompe d'alimentation principale (26),
**caractérisé en ce que** le dispositif soupape (32 ; 320) comprend un corps entourant un bloc de distribution (55 ; 550), avec un canal intérieur (33 ; 330) entre le côté admission (34 ; 340) et le côté sortie (35 ; 350), permettant l'écoulement du carburant, une première ouverture (37 ; 370) reliée au canal intérieur (33 ; 330), et un premier canal de carburant (41), à travers lequel le carburant est alimenté du premier réservoir de carburant (20) à la pompe d'alimentation principale (26), et une seconde ouverture (39 ; 390) reliée au canal intérieur (33 ; 330) et un second canal de carburant (43) à travers lequel le carburant est alimenté du second réservoir de carburant (22) au premier réservoir de carburant (20),
le bloc de distribution (55 ; 550) du dispositif soupape (32) étant agencé pour être dans un premier état ouvert en fonctionnement normal, pendant lequel les premier et second canaux de carburant (41, 43) sont reliés au canal intérieur (33 ; 330) et
- en cas d'interruptions fonctionnelles dans la pompe d'alimentation principale (26), le bloc de distribution (55 ; 550) du dispositif soupape (32) est agencé pour être dans un second état fermé, pendant lequel les première et seconde ouvertures (37, 39 ; 370, 390) sont déplacées par rapport aux premier et second canaux de carburant (41, 43), le premier et le second canal de carburant (41, 43) étant fermés, ou
- en cas d'interruption fonctionnelle dans la pompe de transfert (28), un flotteur (51) est agencé pour fermer le premier canal (41) ;
de façon que le flux de carburant contourne le premier réservoir de carburant (20).

2. Circuit de carburant (4) selon la revendication 1, **caractérisé en ce qu'**un premier conduit de dérivation (60), comprenant une première soupape de conduit de dérivation (62), est agencé dans la pompe d'alimentation principale (26) afin d'amener le flux de carburant au-delà de la pompe d'alimentation principale (26) en cas d'interruption fonctionnelle dans la pompe d'alimentation principale (26).

3. Circuit de carburant (4) selon la revendication 1 ou 2, **caractérisé en ce qu'**un second conduit de dérivation (64), comprenant une seconde soupape de conduit de dérivation (66), est agencé dans la pompe de transfert (28) afin d'amener le flux de carburant au-delà de la pompe de transfert (28) en cas d'interruption fonctionnelle dans la pompe de transfert (28).

4. Circuit de carburant (4) selon l'une quelconque des revendications précédentes, **caractérisé en ce que** le dispositif soupape (32 ; 320) comprend un dispositif à ressort (31 ; 310), agencé pour déplacer le bloc de distribution (55 ; 550) du premier état ouvert au second état fermé, dans lequel la liaison entre le canal intérieur (33 ; 330) et les première et seconde chambres de carburant (41, 42) est fermée.

5. Circuit de carburant (4) selon la revendication 4, **caractérisé en ce que** le bloc de distribution (55) comprend une surface (55') orientée vers le flux de carburant côté admission et une surface (55") orientée vers le flux de carburant côté sortie (55"), la surface (55') côté admission (34) étant plus grande que la surface (55") côté sortie (35).

6. Circuit de carburant (4) selon la revendication 4, **caractérisé en ce que** le bloc de distribution (550), qui est entouré par un corps de soupape (380), comprend un canal intérieur central (330), et une première ouverture (370) et une seconde ouverture (390), le canal central (330) comprenant une longueur de canal entre le côté admission (340) et la seconde ouverture (390), dont le diamètre est plus petit qu'une longueur de canal comprise entre le côté sortie (350) et la seconde ouverture (390).

7. Circuit de carburant (4) selon l'une quelconque des revendications précédentes, **caractérisé en ce que** le premier canal de carburant (41) est relié à un flotteur (51), qui ferme l'ouverture du premier canal (41) dans le premier réservoir de carburant (20) lorsque le niveau de carburant chute au-dessous d'un niveau prédéterminé.

8. Circuit de carburant (4) selon l'une quelconque des revendications précédentes, **caractérisé en ce que** le second canal de carburant (43) est équipé d'un clapet de retour (53), empêchant l'écoulement du carburant du premier réservoir de carburant (20) dans le second réservoir de carburant (43).

9. Circuit de carburant (4) selon l'une quelconque des revendications précédentes, **caractérisé en ce qu'**un dispositif capteur (50 ; 50') est agencé de manière à pouvoir identifier la fonctionnalité de la pompe d'alimentation principale (26) et/ou de la pompe de transfert (28).

10. Circuit de carburant selon la revendication 9, **caractérisé en ce que** le dispositif capteur (50) comprend un capteur de pression qui est disposé dans le second conduit de carburant (40).

11. Circuit de carburant selon la revendication 9, **caractérisé en ce que** le dispositif capteur est agencé pour détecter la fonction du premier moteur électrique (M1) qui actionne la pompe d'alimentation principale (26) ou la pompe de transfert (28), de préférence en détectant sa consommation de puissance.

12. Moteur à combustion interne (2), **caractérisé en ce qu'**il comprend un circuit de carburant (4) selon l'une quelconque des revendications 1 à 11.

13. Véhicule (1), **caractérisé en ce qu'**il comprend un circuit de carburant (4) selon l'une quelconque des revendications 1 à 11.

14. Procédé destiné à commander un circuit de carburant (4) pour un moteur à combustion interne (2) selon l'une quelconque des revendications 1 à 11, **caractérisé en ce qu'**il comprend les étapes suivantes :
a) identifier la fonctionnalité de la pompe d'alimentation principale (26) et de la pompe de transfert (28),
- en cas de bonne fonctionnalité de la pompe d'alimentation principale (26) et de la pompe de transfert (28) ;
b) s'assurer que le dispositif soupape (32 ; 320) qui est agencé en aval de la pompe de transfert (28) se trouve dans un premier état ouvert qui permet le raccordement de la pompe de transfert (28) au premier et au second réservoir de carburant (20, 22) via le second canal de carburant (43) de la soupape et de la pompe d'alimentation principale (26) au premier réservoir de carburant (20) via le premier canal de carburant (41) de la soupape,
c) alimenter le premier réservoir de carburant (20) en carburant en actionnant la pompe de transfert (28) au moyen du second moteur électrique (M2) pour alimenter du carburant du second réservoir de carburant (22) au premier réservoir de carburant (20) via le dispositif soupape (32),
d) alimenter le carburant du premier réservoir de carburant (20) au moteur à combustion interne (2) par l'intermédiaire du dispositif soupape (32) en actionnant la pompe d'alimentation principale (26) au moyen d'un premier moteur électrique (M1),
- dans le cas d'une interruption fonctionnelle identifiée dans la pompe d'alimentation principale (26) ;
e) indiquer, éventuellement, au conducteur qu'une interruption fonctionnelle a été identifiée,
f) s'assurer que le dispositif soupape (32 ; 320) est dans un second état dans lequel les premier et second canaux de carburant (41, 43) dans le dispositif soupape (32 ; 320) sont fermés, ce qui permet au flux de carburant de contourner le premier réservoir de carburant (20),
g) amener le flux de carburant au-delà de la pompe d'alimentation principale (26), la pompe de transfert (28) étant en liaison directe avec le second conduit de carburant (40), et alimenter le carburant en provenance du second réservoir de carburant (22) via le second conduit de carburant (40) en actionnant la pompe de transfert (28) au moyen du second moteur électrique (M2),
ou
- dans le cas d'une interruption fonctionnelle identifiée dans la pompe de transfert (28) ;
h) indiquer, éventuellement, au conducteur qu'une interruption fonctionnelle a été identifiée,
i) s'assurer que le flotteur (51) ferme la liaison entre le premier réservoir de carburant (20) et le dispositif soupape (32), ce qui permet au flux de carburant de contourner le premier réservoir de carburant (20) et permet le raccordement de la pompe d'alimentation principale (26) au premier conduit de carburant (36),
j) amener le flux de carburant au-delà de la pompe de transfert (26), permettant ainsi le raccordement direct de la pompe d'alimentation principale(28) au second réservoir de carburant (22) et alimenter le carburant du second réservoir de carburant (22) au second conduit de carburant (40) via le premier conduit de carburant (36) en actionnant la pompe d'alimentation principale (26) au moyen du premier moteur électrique (M1).
